# EUROPEAN PATENT APPLICATION

(11) **EP 4 521 522 A1**
(43) Date of publication of application: **12.03.2025**
(21) Application number: 24193367.0
(22) Date of filing: 07.08.2024
(51) Int. Cl.: H01M 50/15, H01M 50/16, H01M 50/342, H01M 50/367

(54) **LOWER PLASTIC MEMBER, COVER PLATE ASSEMBLY, ENERGY STORAGE DEVICE, AND ELECTRICAL APPARATUS**

(30) Priority: 11.09.2023 CN 202311164017
(71) Applicant: Xiamen Hithium Energy Storage Technology Co., Ltd., Xiamen, Fujian 361100 (CN)
(72) Inventor: CHEN, Weixin, Fujian 361100 (CN); LAI, Qiqi, Fujian 361100 (CN)
(74) Representative: HGF

(57) **Abstract**

The present disclosure discloses a lower plastic member (100), a cover plate assembly, an energy storage device, and an electrical apparatus. The lower plastic member has a first surface (110) and a second surface. The first surface has at least one first groove (111). The second surface is arranged opposite to the first surface in a thickness direction of the lower plastic member. The second surface has at least one second groove. Each of the at least one second groove is in communication with the at least one first groove in a length direction of the lower plastic member. A bottom of each of the at least one first groove extends to the second surface. The lower plastic member features a structural design with the first groove and the second groove that are in communication with each other in the length direction of the lower plastic member and arranged opposite to each other in the thickness direction of the lower plastic member. The design can not only reduce a risk of blockage of a longitudinal exhaust channel, but also can add a transverse exhaust channel to the longitudinal exhaust channel, facilitating convergence of gas towards an underside of an explosion-proof valve.

## Description

### FIELD

The present disclosure belongs to the field of battery, and more particularly, relates to a lower plastic member, a cover plate assembly, an energy storage device, and an electrical apparatus.

### BACKGROUND

At present, energy storage batteries develop towards large capacity, and a size of a plastic member of a battery top cover is inevitably increasing as well. Currently, a large-size top cover usually features a design in which the lower plastic member has a hole to satisfy an exhaust requirement of a bare cell (e.g., a jelly-roll) under an overheating condition of the bare cell. However, a gas channel of an exhaust hole of the lower plastic member uses a longitudinal exhaust method. This gas channel is in front contact with an internal wound cell, which poses a risk of blockage and easily causes poor exhaust of the bare cell.

### SUMMARY

The present disclosure aims to solve one of the technical problems in the related art at least to some extent. To this end, one object of the present disclosure is to provide a lower plastic member, a cover plate assembly, an energy storage device, and an electrical apparatus. The lower plastic member features a structural design with the first groove and the second groove that are in communication with each other in the length direction of the lower plastic member and arranged opposite to each other in the thickness direction of the lower plastic member. The design can not only reduce a risk of blockage of a longitudinal exhaust channel but also can add a transverse exhaust channel to the longitudinal exhaust channel, facilitating the convergence of the gas towards an underside of an explosion-proof valve.

A first aspect of the present disclosure provides a lower plastic member. According to an embodiment of the present disclosure, the lower plastic member has a first surface and a second surface. The first surface has at least one first groove.

The second surface is arranged opposite to the first surface in a thickness direction of the lower plastic member. The second surface has at least one second groove. Each of the at least one second groove is in communication with a corresponding first groove of the at least one first groove in a length direction of the lower plastic member. A bottom of each of the at least one first groove extends to the second surface.

The lower plastic member in the above embodiment of the present disclosure has advantages as follows. By arranging the groove on each of the two surfaces of the lower plastic member that are arranged opposite to each other in the thickness direction of the lower plastic member, when the lower plastic member is used in the cover plate assembly to encapsulate a housing of the bare cell, there is a gap between a part of the groove that opens towards a bare battery and the bare cell. On the one hand, it can reduce a contact area between the lower plastic member and the bare cell, and reduce the risk of blockage of a part of the exhaust channel caused during transportation or use of the bare cell. On the other hand, gas circulation between the first groove and the second groove can be realized with the communication between the second groove and the first groove in the length direction of the lower plastic member. As a result, gas at a side of the lower plastic member close to the bare cell can be directed towards a side of the lower plastic member away from the bare cell. Furthermore, gas is allowed to flow in the length of the lower plastic member. That is, the transverse exhaust channel is added to the longitudinal exhaust channel. In this way, the convergence of the gas towards the underside of the explosion-proof valve is facilitated, satisfying an exhaust requirement under an overheating condition of the bare cell, and reducing a risk of poor exhaust. Moreover, with the bottom of the first groove extending to the second surface, the second surface can also face a side of the bare cell during a battery packaging process. Thus, there is no need to reserve a gap between the lower plastic member and the bare cell to satisfy the exhaust requirement. The lower plastic member can be directly pressed above the bare cell to prevent the bare cell from shaking and improve internal stability of the bare cell.

In addition, the lower plastic member according to the above embodiment of the present disclosure may also have additional technical features as follows.

In some embodiments of the present disclosure, the at least one first groove and the at least one second groove are successively and alternately arranged in the length direction of the lower plastic member. A total number of the at least one first grooves and the at least one second grooves that is successively and alternately arranged is greater than or equal to 3.

In some embodiments of the present disclosure, the first surface has the at least one first grooves arranged at intervals in the length direction of the lower plastic member; and/or the second surface has the at least one second grooves arranged at intervals in the length direction of the lower plastic member.

In some embodiments of the present disclosure, an extending distance of the at least one first groove in the length direction of the lower plastic member is smaller than or equal to an extending distance of the at least one second groove in the length direction of the lower plastic member.

In some embodiments of the present disclosure, each of the at least one first groove is provided with a reinforcement rib, and each of the at least one second groove is provided with a reinforcement rib. The reinforcement ribs are arranged in the length direction of the lower plastic member.

In some embodiments of the present disclosure, a ratio of a sum of the extending distance of the at least one first groove in the length direction of the lower plastic member and the extending distance of the at least one second groove in the length direction of the lower plastic member to a length of the lower plastic member is greater than or equal to 0.5.

In some embodiments of the present disclosure, a side wall of each of the at least one first groove has a thickness ranging from 0.5 mm to 1.5 mm, and a side wall of each of the at least one second groove has a thickness ranging from 0.5 mm to 1.5 mm.

In some embodiments of the present disclosure, a bottom of the at least one second groove extends to the first surface.

In some embodiments of the present disclosure, a ratio of the extending distance of the at least one first groove in the length direction of the lower plastic member to the extending distance of the at least one second groove in the length direction of the lower plastic member ranges from 0.2 to 1.

In some embodiments of the present disclosure, the ratio of the sum of the extending distance of the at least one first groove in the length direction of the lower plastic member and the extending distance of the at least one second groove in the length direction of the lower plastic member to the length of the lower plastic member ranges from 0.5 to 0.8.

In some embodiments of the present disclosure, an extending distance of the reinforcement rib in a width direction of the lower plastic member ranges from 0.5 mm to 1.5 mm.

In some embodiments of the present disclosure, the at least one first groove has a first exhaust through-hole, the first exhaust through-hole penetrating a bottom of the at least one first groove.

In some embodiments of the present disclosure, the lower plastic member is provided with an explosion-proof valve exhaust region. The explosion-proof valve exhaust region has a second exhaust through-hole penetrating the lower plastic member in the thickness direction of the lower plastic member. The explosion-proof valve exhaust region is in communication with the at least one first groove and/or the at least one second grooves in the length direction of the lower plastic member.

In some embodiments of the present disclosure, the at least one first groove and the at least one second groove are successively and alternately arranged at each of two sides of the explosion-proof valve exhaust region in the length direction of the lower plastic member.

In some embodiments of the present disclosure, the lower plastic member includes a first sub-lower plastic member and a second sub-lower plastic member. The first sub-lower plastic member and the second sub-lower plastic member are arranged to be spliced with each other in the length direction of the lower plastic member.

In some embodiments of the present disclosure, the first sub-lower plastic member is in a lap-joint or a snap-fitting with the second sub-lower plastic member.

In some embodiments of the present disclosure, each of the first sub-lower plastic member and the second sub-lower plastic member has at least one first groove and at least one second groove. The at least one first groove and the at least one second groove of the first sub-lower plastic member are successively and alternately arranged in the length direction of the lower plastic member. The at least one first groove and the at least one second groove of the second sub-lower plastic member are successively and alternately arranged in the length direction of the lower plastic member.

A second aspect of the present disclosure provides a cover plate assembly. According to an embodiment of the present disclosure, the cover plate assembly includes the above-mentioned lower plastic member. With the above-mentioned lower plastic member applied in the cover plate assembly, gas evolved in the bare cell easily converges towards the underside of the explosion-proof valve, satisfying the exhaust requirement of the bare cell under the overheating condition of the bare cell, and reducing the risk of the poor exhaust. Furthermore, the lower plastic member can directly press against the bare cell during the packaging of the bare cell to prevent the bare cell from shaking and improve the internal stability of the bare cell.

In some embodiments of the present disclosure, the cover plate assembly further includes a lithographic cover plate. The lithographic cover plate has a third surface and a fourth surface that are arranged opposite to each other in a thickness direction of the lithographic cover plate. The third surface is provided with a protrusion arranged continuously in a length direction of the lithographic cover plate. The protrusion has an explosion-proof valve mounting hole. The fourth surface abuts with a first surface of the lower plastic member and has a recess arranged corresponding to the protrusion.

In some embodiments of the present disclosure, the protrusion is arranged at a middle part of the lithographic cover plate in a width direction of the lithographic cover plate; and/or the protrusion is symmetrically arranged in the width direction of the lithographic cover plate.

In some embodiments of the present disclosure, a ratio of an extending distance of the protrusion in a length direction of the lithographic cover plate to a length of the lithographic cover plate ranges from 0.2 to 0.9

In some embodiments of the present disclosure, a ratio of an extending distance of the protrusion in a length direction of the lithographic cover plate to a length of the lithographic cover plate ranges from 0.5 to 0.9.

In some embodiments of the present disclosure, a ratio of the extending distance of the protrusion in the width direction of the lithographic cover plate to a width of the lithographic cover plate ranges from 0.05 to 0.95.

In some embodiments of the present disclosure, a ratio of a depth of the groove to a thickness of the lithographic cover plate ranges from 0.2 to 1.

In some embodiments of the present disclosure, a ratio of a height of the protrusion to the thickness of the lithographic cover plate ranges from 0.2 to 1.

In some embodiments of the present disclosure, the protrusion includes a first region and a second region. The explosion-proof valve mounting hole is provided on the second region. An extending distance of the first region in a width direction of the lithographic cover plate is smaller than an extending distance of the second region in a width direction of the lithographic cover plate.

In some embodiments of the present disclosure, a distance between an edge of the second region and an edge of the explosion-proof valve mounting hole is greater than or equal to 1 mm.

In some embodiments of the present disclosure, a ratio of the extending distance of the first region in the width direction of the lithographic cover plate to a width of the lithographic cover plate ranges from 0.5 to 0.6.

In some embodiments of the present disclosure, the extending distance of the first region in the width direction of the lithographic cover plate is greater than or equal to 2mm.

In some embodiments of the present disclosure, a ratio of an extending distance of the first region in the length direction of the lithographic cover plate to the extending distance of the protrusion in the length direction of the lithographic cover plate ranges from 0.4 to 0.9.

In some embodiments of the present disclosure, the protrusion further includes a third region has a liquid injection hole. An extending distance of the third region in the width direction of the lithographic cover plate is greater than or equal to the extending distance of the first region in the width direction of the lithographic cover plate.

A third aspect of the present disclosure provides an energy storage device. According to an embodiment of the present disclosure, the energy storage device includes a housing, a cover plate assembly, and a bare cell. The housing has an opening. The cover plate assembly closes the opening. The cover plate assembly is the above-mentioned cover plate assembly or includes the above-mentioned lower plastic member. The bare cell is accommodated in the housing. The features and the effects described for the above lower plastic member and the above cover plate assembly apply mutatis mutandis to the energy storage device, and details thereof are not repeated herein. In general, the energy storage device can not only better satisfy the exhaust requirement of the bare cell under the overheating condition of the bare cell, but also achieve better internal stability of the bare cell.

A fourth aspect of the present disclosure provides an electrical apparatus. According to an embodiment of the present disclosure, the electrical apparatus includes the above-mentioned energy storage device. The features and the effects described for the above energy storage device apply mutatis mutandis to the electrical apparatus, and details thereof are not repeated herein.

### BRIEF DESCRIPTION OF THE DRAWINGS

FIG. 1 is a schematic structural view of a lower plastic member according to an embodiment of the present disclosure.
FIG. 2 is an enlarged view of a first surface of an end of the lower plastic member shown in FIG. 1 in a length direction of the lower plastic member.
FIG. 3 is an enlarged view of a second surface of the end of the lower plastic member shown in FIG. 1 in the length direction of the lower plastic member.
FIG. 4 is a cross-section and partial enlarged view of a lower plastic member parallel to a thickness direction of the lower plastic member according to an embodiment of the present disclosure.
FIG. 5 is a schematic structural view of a lower plastic member including a first sub-lower plastic member and a second sub-lower plastic member according to an embodiment of the present disclosure.
FIG. 6 is a schematic structural view of a lithographic cover plate according to an embodiment of the present disclosure.
FIG. 7 is a cross-section and partial enlarged view of a lithographic cover plate parallel to a thickness direction of the lithographic cover plate according to an embodiment of the present disclosure.
FIG. 8 is an exploded view of a cover plate assembly according to an embodiment of the present disclosure.
FIG. 9 is a schematic structural view of an energy storage device according to an embodiment of the present disclosure.

Reference numerals:
100-lower plastic member; 110-first side; 111-first groove; 112-first exhaust through-hole; 120-second side; 121-second groove; 130-explosion-proof valve exhaust region; 131-second exhaust through-hole; 140-reinforcement rib; 151-positive pole mounting hole; 152-negative pole mounting hole; 100a-first sub-lower plastic member; 100b-second sub-lower plastic member; 200-lithographic cover plate; 210-third side; 211-protrusion; 212-explosion-proof valve mounting hole; 213-liquid injection hole; 211a-first region; 211b-second region; 211c-third region; 220-fourth side; 221-recess; 300-upper plastic member; 400-explosion-proof valve; 500-mass block; 600-sealing ring; and 700-pole.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

In the description of the present disclosure, it is to be understood that, terms such as "length", "width", and "thickness" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure. In addition, terms such as "first", "second", "third", and "fourth" are used herein for purposes of description and are not intended to indicate or imply relative importance or significance. Furthermore, the feature defined with "first", "second", "third", and "fourth" may comprise one or more this feature distinctly or implicitly. In the description of the present disclosure, "a plurality of" means at least two, such as two and three, unless specified otherwise.

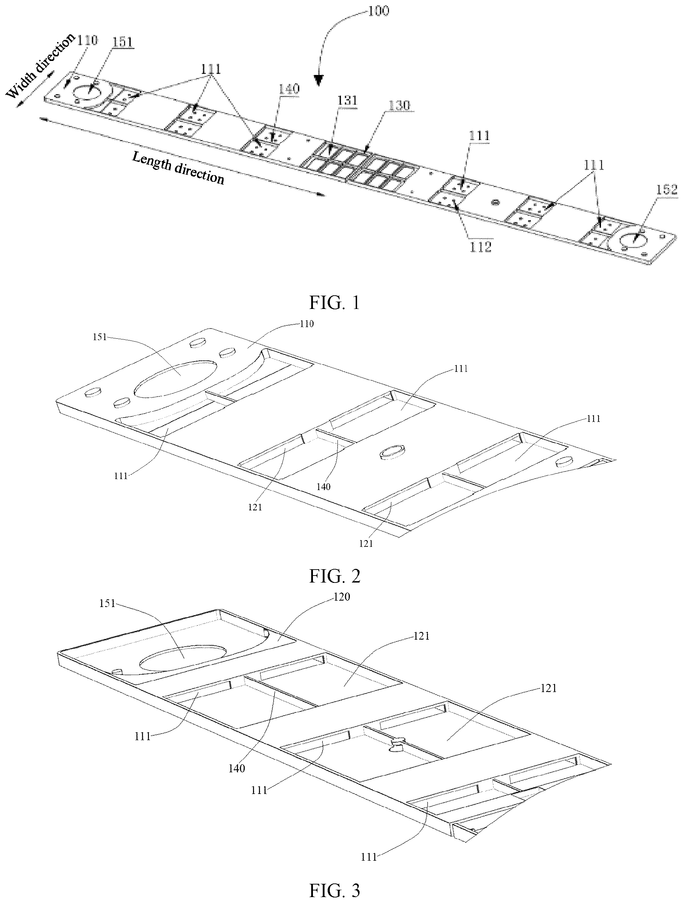

A first aspect of the present disclosure provides a lower plastic member 100. According to an embodiment of the present disclosure, as understood with reference to FIGS. 1 to 3, the lower plastic member has a first surface 110 and a second surface 120. The first surface 110 has at least one first groove 111. The second surface 120 is arranged opposite to the first surface 110 in a thickness direction of the lower plastic member 100. The second surface 120 has at least one second groove 121. Each of the at least one second groove 121 is in communication with a corresponding first groove 111 of the at least one first groove 111 in a length direction of the lower plastic member 100. A bottom of each of the at least one first groove 111 extends to the second surface. It can be understood that in practical applications, the first surface 110 may face a lithographic cover plate of a battery cover plate assembly, and the second surface 120 may face the bare cell. It can be understood that the lithographic cover plate is a main part of the battery cover plate (assembly), and related components such as a pole and an explosion-proof valve can be fixed on the lithographic cover plate.

The lower plastic member has advantages as follows. By arranging the groove on each of the two surfaces of the lower plastic member that are arranged opposite to each other in the thickness direction of the lower plastic member, when the lower plastic member is used in the cover plate assembly to encapsulate a housing of the battery, there is a gap between a part of the groove that open towards the bare battery and the bare cell. On the one hand, it can reduce a contact area between the lower plastic member and the bare cell, and reduce the risk of blockage of a part of the exhaust channel caused during transportation or use of the bare cell. On the other hand, with the communication between the first groove and the second groove in the length direction of the lower plastic member, gas circulation between the first groove and the second groove can be realized to form a transverse exhaust channel. As a result, gas at a side of the lower plastic member close to the bare cell can be directed towards a side of the lower plastic member away from the bare cell. Furthermore, gas is allowed to flow in the length of the lower plastic member. That is, the transverse exhaust channel is added to the longitudinal exhaust channel. In this way, the convergence of the gas towards the underside of the explosion-proof valve is facilitated (Specifically, gas evolved in the bare cell is channeled as a whole through the transverse exhaust channel, instead of being stored in the groove of the lower plastic member in sections, and a weak portion of an entire battery cell is located at the explosion-proof valve, and the gas evolved in the battery can be collectively directed to the weak portion through the transverse exhaust channel for burst release, such as burst release after the gas converging towards the underside of the explosion-proof valve), satisfying an exhaust requirement under an overheating condition of the bare cell, and reducing a risk of poor exhaust. Moreover, with the bottom of the first groove extending to the second surface, the second surface can also face a side of the bare cell during a battery packaging process. Thus, there is no need to reserve a gap between the lower plastic member and the bare cell to satisfy the exhaust requirement. The lower plastic member can be directly pressed above the bare cell to prevent the bare cell from shaking and improve internal stability of the bare cell. It can be understood that the longitudinal exhaust channel described in the present disclosure refers to an exhaust channel in the thickness direction of the lower plastic member, and the transverse exhaust channel refers to an exhaust channel in the length direction of the lower plastic member.

The lower plastic member according to the above embodiments of the present disclosure will be described in detail below with reference to FIG. 1 to 9.

In some embodiments of the present disclosure, as understood in conjunction with FIG. 1 to 4, one of the first surface 110 and the second surface 120 of the lower plastic member 100 faces the bare cell, and another one of the first surface 110 and the second surface 120 of the lower plastic member 100 faces the lithographic cover plate of the battery cover plate assembly. Taking an example where the first surface 110 faces the lithographic cover plate and the second surface 120 faces the bare cell, the lower plastic member 100 can be directly pressed against the bare cell. In this case, a gap is formed between the second groove 121 and the bare cell. The gap space can accommodate the gas evolved in the bare cell, and the gas is directed into the first surface of the lower plastic member 100 through the communication between the second groove 121 and the first groove 111. In addition, when at least one second grooves 121 and at least one first grooves 111 are successively and alternately arranged in the length direction of the lower plastic member 100, a transverse gas channel extending in the length direction of the lower plastic member 100 can also be formed, and the gas is allowed to sequentially pass through between the at least one first grooves 111 and the at least one second grooves 121 that are successively and alternately arranged in the length direction of the lower plastic member 100 until the gas reaches a region below the explosion-proof valve. In some embodiments, as understood with reference to FIG. 1, the lower plastic member 100 may be provided with an explosion-proof valve exhaust region 130. The explosion-proof valve exhaust region 130 has at least one end in communication with the first groove 111 and/or the second groove 121 in the length direction of the lower plastic member 100. With this arrangement, the transverse exhaust channel can be directly in communication with the explosion-proof valve exhaust region, which is more beneficial to the gas evolved in the bare cell to converge to the explosion-proof valve exhaust region to reduce the risk of poor exhaust of the bare cell.

In some embodiments of the present disclosure, as understood with reference to FIG. 1 to 4, the lower plastic member 100 has at least one first groove 111 and at least one second groove 121 that are successively and alternately arranged in the length direction of the lower plastic member 100. A total number of the at least one first groove 111 and the at least one second groove 121 that are successively and alternately arranged is greater than or equal to 2, and preferably may be greater than or equal to 3. Taking an example where the second surface 120 faces the bare cell, gas is discharged from the bare cell. If an abutting area between the second surface 120 and the bare cell is too large, it will hinder the exhaust of the bare cell, but the gas evolved in the bare cell is more easily collected with the at least one first groove and the at least one second groove that are arranged successively and alternatively in the length direction of the lower plastic member. In addition, increasing the total number of the first grooves and the second grooves that are arranged successively and alternatively in the length direction of the lower plastic member helps to extend a length of the transverse exhaust channel and to increase exhaust space between the lower plastic member and the bare cell, which not only increases reliability of the transverse exhaust channel, but also promotes convergence of the gas evolved in different regions of the bare cell towards the explosion-proof valve exhaust region to reduce the risk of poor exhaust of the bare cell. As some specific examples, a total number of the first grooves and the second grooves that is successively and alternatively arranged may range from 3 to 6. This arrangement not only helps to collect the gas evolved in the bare cell but also helps the gas to converge along the transverse exhaust channel towards the explosion-proof valve exhaust region.

It should be noted that the total number of first grooves 111 and second grooves 121 that is successively and alternatively arranged in the length direction of the lower plastic member 100 may be equal to the total number of the first grooves 111 and the second grooves 121 in the lower plastic member 100, or may also be smaller than the total number of the first grooves 111 and the second grooves 121 in the entire lower plastic member 100. For example, when the explosion-proof valve is located at an end portion of the lithographic cover plate, all the first grooves 111 and the second grooves 121 in the lower plastic member 100 may be arranged successively and alternatively in the length direction of the lower plastic member 100, and the explosion-proof valve exhaust region 130 may be in communication with the first groove 111 or the second groove 121. For another example, as understood with reference to FIG. 1, when the explosion-proof valve is located in a middle part of the lithographic cover plate, at least one first groove 111 and at least one second groove 121 that are successively and alternatively arranged at two sides of the explosion-proof valve exhaust region 130 in the length direction of the lower plastic member 100, respectively, and the two ends of the explosion-proof valve exhaust region 130 are in communication with the first grooves 111 and/or the second grooves, respectively. The above two methods each can realize the communication between the transverse exhaust channel and the explosion-proof valve exhaust region.

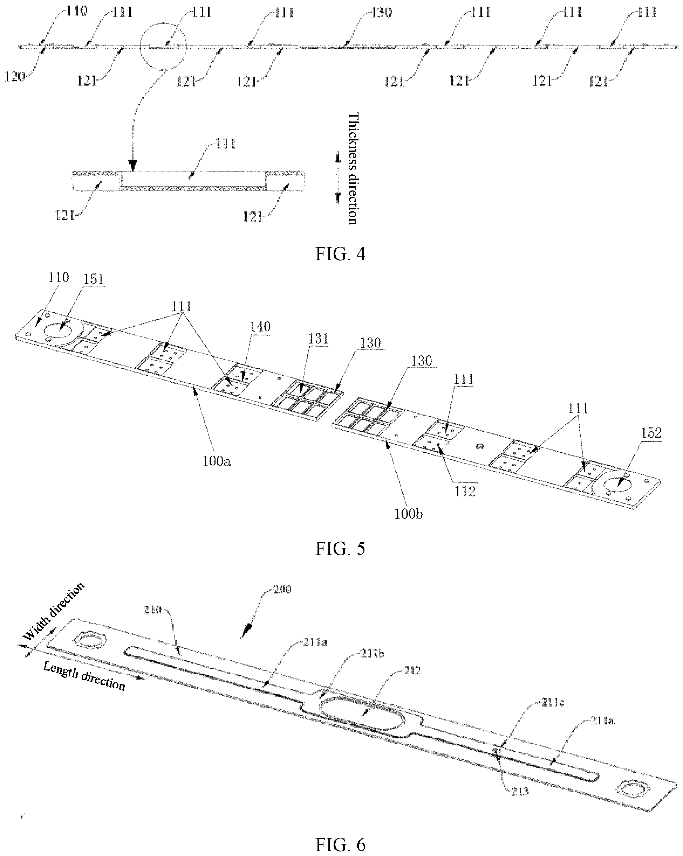

In some embodiments of the present disclosure, as understood with reference to FIG. 1 or 4, the first surface 110 may have at least one first groove 111, and the at least one first groove 111 may be arranged at intervals in the length direction of the lower plastic member 100; and/or the second surface 120 may have at least one second groove 121, and the at least one second groove 121 may be arranged at intervals in the length direction of the lower plastic member 100. Increasing the number of first grooves and the number of the second grooves helps to extend the length of the transverse exhaust channel. Taking an example where the second surface faces the bare cell, arranging the second grooves at intervals also helps to collect the gas evolved in the bare cell, thereby helping the gas evolved in the bare cell to converge to the explosion-proof valve exhaust region to reduce the risk of poor exhaust of the bare cell.

In some embodiments of the present disclosure, as understood with reference to FIG. 4, a bottom of the first groove 111 extends to the second surface 120, and a bottom of the second groove 120 extends to the first surface 110. On the one hand, this arrangement can enlarge the exhaust channel, which easily helps to collect the gas evolved in the bare cell and helps the collected gas to converge through the transverse exhaust channel formed by the first groove and the second groove towards the underside of the explosion-proof valve to reduce the risk of poor exhaust. On the other hand, since the second surface 120 in the battery cell is away from the lithographic cover plate but faces the bare cell, with the bottom of the first groove extending to the second surface, the bottom of the groove is directly pressed against the bare cell to further prevent the bare cell from shaking and to improve the internal stability of the bare cell.

In some embodiments of the present disclosure, as understood with reference to FIG. 4, an extending distance of the first groove 111 in the length direction of the lower plastic member 100 is smaller than or equal to an extending distance of the second groove 121 in the length direction of the lower plastic member 100. When the first surface of the lower plastic member is away from the bare cell, the second surface of the lower plastic member is adapted to abut with the bare cell. In this case, a gap is formed between the second groove and the bare cell and mainly configured to collect the gas evolved in the bare cell, and the gas evolved in the bare cell is directed to the first groove in communication with the gap. The first groove is mainly configured to cooperate with the second groove to allow for transverse transmission of the gas in the length direction of the lower plastic member. Therefore, controlling the extending distance of the first groove to be smaller than or equal to the extending distance of the second groove in the length direction of the lower plastic member easily helps to collect the gas evolved in the bare cell and helps the collected gas to converge through the transverse exhaust channel to the underside of the explosion-proof valve to reduce the risk of poor exhaust.

In some embodiments of the present disclosure, a ratio of the extending distance of the first groove 111 in the length direction of the lower plastic member 100 to the extending distance of the second groove 121 in the length direction of the lower plastic member 100 may range from 0.2 to 1, for example, it may be 0.2, 0.3, 0.4, 0.5, 0.6, 0.7, 0.8, 0.9, 1, 0.2 to 0.5, etc. The second surface of the lower plastic member is adapted to abut with the bare cell. It is preferable to extend the bottom of the first groove to the second surface to further prevent the bare cell from shaking. However, too large or too small extending distance of the second groove in the length direction of the lower plastic member will reduce the fixing effect of the bare cell. Controlling the extending distance of the first groove and the extending distance of the second groove in the length direction of the lower plastic member to satisfy the above conditions helps to collect the gas evolved in the bare cell and helps the gas to converge through the transverse exhaust channel formed by the first groove and the second groove towards the underside of the explosion-proof valve, and furthermore, helps to further prevent the bare cell from shaking and to improve the internal stability of the bare cell.

In some embodiments of the present disclosure, in the length direction of the lower plastic member 100, when extending from the end portion of the lower plastic member 100 to the middle part of the lower plastic member, the first groove 111 may be first provided, and then the second groove 121 may be provided, which are sequentially and alternately arranged. That is, the first groove 111 may be closer to the end portion of the lower plastic member 100 at each of the two ends of the lower plastic member 100 in the length direction of the lower plastic member 100. A prerequisite to prevent the bare cell from shaking is to first fix the two ends of the bare cell (i.e., the two ends of the bare cell in the length of the lithographic cover plate) at two ends of the battery cell, to allow the two ends of the bare cell not to contact with a shell of the battery cell (such as an aluminum shell). The bottom of the first groove in the present disclosure may be directly pressed against the bare cell to allow the lower plastic member to be closer to the first groove at the two ends of the lower plastic member in the length direction of the lower plastic member. The bottom of the first groove can be used to directly abut with and be fixed to the two ends of the bare cell to improve the fixing effect of the bare cell.

In some embodiments of the present disclosure, as understood with reference to FIGS. 1 to 3, each of the first groove 111 is provided with a reinforcement rib 140, and each of the second groove 121 is provided with a reinforcement rib 140, and the reinforcement ribs 140 may be arranged in the length direction of the lower plastic member 100. Arranging the reinforcement ribs 140 in the length of the lower plastic member can not only improve overall strength of the lower plastic member, but also have no obvious negative effect on the exhaust effect of the transverse exhaust channel. Further, an extending distance of the reinforcement rib 140 in a width direction of the lower plastic member 100 may range from 0.5mmm to 1.5mm, for example, it may be 0.5mm, 0.8mm, 1mm, 1.2mm, 1.5mm, etc. Increasing the extending distance of the reinforcement rib 140 in the width direction of the lower plastic member 100 can improve the overall strength of the lower plastic member. However, if the distance is too large, a volume of the transverse exhaust channel will be reduced, which affects the exhaust effect. Controlling the size of the reinforcement rib 140 to satisfy the above conditions helps to further balance the overall strength and the exhaust effect of the lower plastic member. As some specific examples, in the width direction of the lower plastic member 100, the reinforcement rib 140 may be located in a middle part of the lower plastic member 100. This arrangement helps to further improve a reinforcement effect of the reinforcement rib 140.

In some embodiments of the present disclosure, a ratio of a sum of the extending distance in the length direction of the lower plastic member 100 of the first groove 111 and the extending distance of the second groove 121 in the length direction of the lower plastic member 100 to a length of the lower plastic member 100 may not be greater than or equal to 0.5. For example, the ratio may be 0.5, 0.6, 0.7, 0.8, 0.9, etc. If the length of the transverse exhaust channel is too short, it is not beneficial to timely collect the gas evolved in each region of the bare cell and to improve the exhaust effect. With the extending distance of the first groove and the extending distance of the second groove in the length direction of the lower plastic member to satisfy the above conditions, the exhaust effect is further improved to reduce the risk of poor exhaust. Further, the ratio of the sum of the extending distance of the first groove 111 and the extending distance of the second groove 121 in the length direction of the lower plastic member 100 to the length of the lower plastic member 100 may range from 0.5 to 0.8. This arrangement helps to further improve the exhaust effect while not affecting the structural setting of positions of other holes (such as a pole mounting hole and an exhaust valve exhaust region).

In some embodiments of the present disclosure, a side wall of each of the first groove has a thickness ranging from 0.5 mm to 1.5 mm, and a side wall of each of the second groove has a thickness ranging from 0.5 mm to 1.5 mm, for example, it may be 0.5mm, 0.8mm, 1mm, 1.2mm, 1.5mm, etc. If the thickness of the side wall of the groove is too small, strength of the side wall of the groove is low, and the side wall of the groove will easily deform during the transportation and the use of the bare cell, which in turn affects the reliability of the exhaust channel. However, if the thickness of the side wall of the groove is too large, the volume of the transverse exhaust channel will be reduced, which also affects the exhaust effect. Controlling the thickness of the side wall of each of the first groove and the second groove to satisfy the above conditions helps further balance the strength and the exhaust effect of the lower plastic member to reduce the risk of poor exhaust.

In some embodiments of the present disclosure, as understood with reference to FIG. 1, the first groove 111 may further have a first exhaust through-hole 112, and the first exhaust through-hole 112 penetrates a bottom of the first groove 111. In practical applications, the first surface may be arranged away from the bare cell. When there is a gap between the bottom of the first groove and the bare cell or the bottom of the first groove has not completely abutted against the bare cell, arranging the first exhaust through-hole also helps to direct the gas evolved in the bare cell into the first groove through a longitudinal exhaust channel to improve the exhaust effect.

In some embodiments of the present disclosure, as understood with reference to FIG. 1, the lower plastic member 100 may be provided with an explosion-proof valve exhaust region 130, the explosion-proof valve exhaust region 130 has a second exhaust through-hole 131 penetrating the lower plastic member 100 in the thickness direction of the lower plastic member 100, and the explosion-proof valve exhaust region 130 is in communication with the at least one first groove 111 and/or the at least one second groove 121 in the length direction of the lower plastic member 100. This arrangement not only increases the longitudinal exhaust channel, but also enables the communication between the transverse exhaust channel and the explosion-proof valve exhaust region, which can further ensure that the gas evolved in the bare cell can smoothly converge to the explosion-proof valve exhaust region to reduce the risk of poor exhaust.

In some embodiments of the present disclosure, the lower plastic member 100 has at least one first groove 111 and at least one second groove 121 that is successively and alternately arranged at each of two sides of the explosion-proof valve exhaust region 130 in the length direction of the lower plastic member 121. This arrangement can not only realize the communication between the transverse exhaust channel and the explosion-proof valve exhaust region, but also help to shorten a path for the gas evolved in the bare cell to converge to the explosion-proof valve exhaust region as well as an exhaust time. In this way, the exhaust effect is further improved to reduce the risk of poor exhaust.

In some embodiments of the present disclosure, as understood in conjunction with FIGS. 1 and 5, the lower plastic member 100 includes a first sub-lower plastic member 100a and a second sub-lower plastic member 100b. The first sub-lower plastic member 100a and the second sub-lower plastic member 100b are arranged to be spliced with each other in the length direction of the lower plastic member. In the lower plastic member, in addition to the structural arrangements of the first groove, the second groove, and the explosion-proof valve exhaust region, structural designs can further include a pole mounting hole, a liquid injection hole, a blind hole connected to the lithographic cover plate, etc. The overall structure is relatively complex and long in length, and is relatively difficult to process. The spliced structural design can not only reduce a difficulty of preparing the lower plastic member, but also help to reduce a difficulty of fitting the lower plastic member with the cover plate assembly. As some specific examples, the lower plastic member 100 may have both a positive pole mounting hole 151 and a negative pole mounting hole 152. In this case, the positive pole mounting hole 151 may be arranged at one of the first sub-lower plastic member 100a and the second sub-lower plastic member 100b, and the negative pole mounting hole 152 may be arranged at another one of the first sub-lower plastic member 100a and the second sub-lower plastic member 100b. As some other specific examples, the lower plastic member 100 may be provided with an explosion-proof valve exhaust region 130. The explosion-proof valve exhaust region 130 may be arranged at the first sub-lower plastic member 100a or the second sub-lower plastic member 100b. Or a part of the explosion-proof valve exhaust region 130 may be arranged at the first sub-lower plastic member 100a, and another part may be arranged at the second sub-lower plastic member 100b. The two parts form the complete explosion-proof valve exhaust region 130 after the first sub-lower plastic member 100a and the second sub-lower plastic member part 100b are spliced with each other.

In some embodiments of the present disclosure, the splicing method of the first sub-lower plastic member 100a and the second sub-lower plastic member 100b is not particularly limited, and those skilled in the art can flexibly choose the splicing method based on actual needs, as long as an effect of insulation between the lithographic cover plate and the bare cell can be realized. For example, the first sub-lower plastic member 100a may be in a lap-joint or a sap-fitting with the second sub-lower plastic member 100b. When the first sub-lower plastic member 100a is in a lap-joint with the second sub-lower plastic member 100b, the first sub-lower plastic member can have a width narrower than a skirt edge of the second sub-lower plastic member at the lap-joint between the first sub-lower plastic member and the second sub-lower plastic member. Thus, during the fitting process of the cover plate assembly, the first sub-lower plastic member in a width direction of the first sub-lower plastic member can be limited using the skirt edge of the second sub-lower plastic member. At the same time, the lap-joint can be limited through the abutment of the bare cell and lithographic cover plate against the lower plastic member in a thickness direction of the lower plastic member and through the fixing of the pole into the pole mounting hole in the length direction of the lower plastic member.

In some embodiments of the present disclosure, as understood with reference to FIG. 5, each of the first sub-lower plastic member 100a and the second sub-lower plastic member 100b has at least one first groove 111 and at least one second groove 112. The at least one first groove 111 and the at least one second groove 112 of the first sub-lower plastic member 100a are successively and alternately arranged in the length direction of the lower plastic member 100. The at least one first groove 111 and the at least one second groove 112 of the second sub-lower plastic member 100b are successively and alternately arranged in the length direction of the lower plastic member 100. This arrangement not only further improves the transverse exhaust effect to reduce the risk of poor exhaust, but also help to prevent the bare cell from shaking to improve the internal stability of the bare cell. Further, in the length direction of the lower plastic member 100, the first groove and the second groove arranged in each of the first sub-lower plastic member 100a and the second sub-lower plastic member 100b are in direct or indirect communication with each other. This arrangement helps to further ensure the exhaust effect.

A second aspect of the present disclosure provides a cover plate assembly. According to an embodiment of the present disclosure, the cover plate assembly includes the above-mentioned lower plastic member 100. With the above-mentioned lower plastic member 100 applied in the cover plate assembly, the gas evolved in the bare cell easily converges towards the underside of the explosion-proof valve, satisfying the exhaust requirement of the bare cell under the overheating condition of the bare cell, and reducing the risk of the poor exhaust. Furthermore, the lower plastic member can directly press against the bare cell during the packaging of the bare cell to prevent the bare cell from shaking and to improve the internal stability of the bare cell.

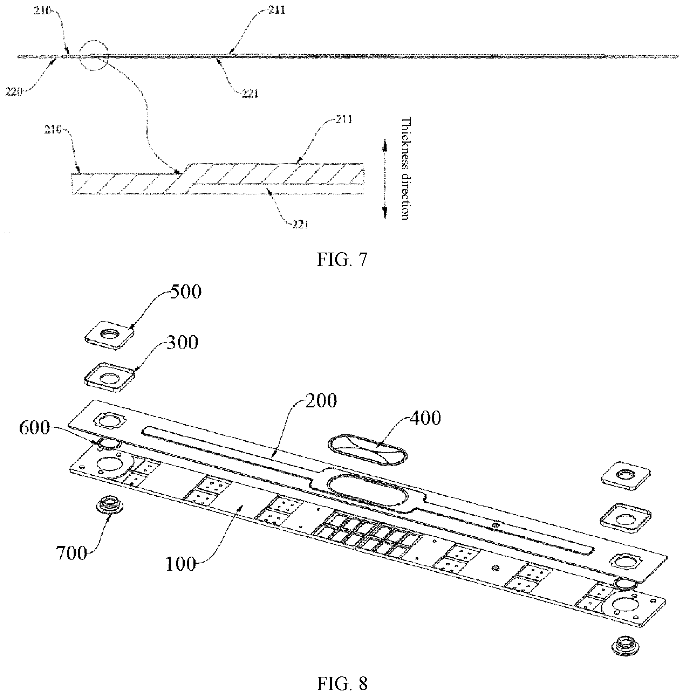

In some embodiments of the present disclosure, as understood with reference to FIGS. 6 and 7, the cover plate assembly further includes a lithographic cover plate 200. The lithographic cover plate 200 has a third surface 210 and a fourth surface 220 that are arranged opposite to each other in a thickness direction of the lithographic cover plate 200. The third surface 210 is provided with a protrusion 211 arranged continuously in a length direction of the lithographic cover plate 200. The protrusion 211 has an explosion-proof valve mounting hole 212. The fourth surface 220 abuts with a first surface of the lower plastic member 100 and has a recess 221 arranged corresponding to the protrusion 211. It can be understood that the protrusion 211 has a continuous and uninterrupted structure in the length direction of the lithographic cover plate 200, and the recess 221 also has a continuous and uninterrupted structure. The protrusion 211 and the recess 221 that are of the continuous and uninterrupted structure in the length direction of the lithographic cover plate 200 can achieve better enforcement effect and exhaust effect. This arrangement has beneficial effects as follows. 1. The protrusion at the third surface of the lithographic cover plate can serve as the reinforcement rib, which can improve the structural strength of the lithographic cover plate and avoid fitting and welding failures of the lithographic cover plate due to a bending problem caused when the lithographic cover plate is long. 2. The improvement of the structural strength of the lithographic cover plate also helps to prevent a problem of malfunction of the lithographic cover plate caused by deformation of the lithographic cover plate. 3. The groove formed at the fourth surface of the lithographic cover plate is in communication with a mounting position of the explosion-proof valve, which facilitates exhaust of the gas evolved inside the battery. Further, in the width direction of the cover plate assembly, at least a part of the first groove 111 overlaps with the recess 221. This arrangement can further enlarge the transverse exhaust channel and ensure that the gas evolved in the bare cell can smoothly converge to the underside of the explosion-proof valve.

In some embodiments of the present disclosure, a specific type of the lithographic cover plate 200 may include but is not limited to a lithographic aluminum foil, and the lithographic aluminum foil may be made of pure aluminum or aluminum alloy. Using the aluminum sheet not only facilitates lightweighting of the battery, but also helps to reduce an internal resistance of the battery, decrease an overcurrent, and improve performance of the battery.

In some embodiments of the present disclosure, the position of the explosion-proof valve mounting hole 212 on the protrusion 211 is not particularly limited. Those skilled in the art can flexibly choose the position based on actual needs, as long as it can correspond to the explosion-proof valve exhaust region of the lower plastic member. In addition, the lithographic cover plate 200 may further have a positive pole through-hole and/or a negative pole through-hole, and the positive pole through-hole and/or the negative pole through-hole are arranged corresponding to the positive pole mounting hole 151 and/or the negative pole mounting hole 152 of the lower plastic member, respectively.

In some embodiments of the present disclosure, the recess 221 and the protrusion 211 may be formed integrally by stamping. In this way, the structure is not only easy to process, but the protrusion formed through the punching can also serve as the reinforcement rib 140, which can better improve the structural strength of the lithographic cover plate.

In some embodiments of the present disclosure, as understood with reference to FIG. 6, the protrusion 211 may be arranged at a middle part of the lithographic cover plate 200 in a width direction of the lithographic cover plate 200. Compared with arranging the protrusion at each of the two sides of the lithographic cover plate in the width direction of the lithographic cover plate, the protrusion can serve as the reinforcement rib 140 more effectively by arranging the protrusions at the middle part of the lithographic cover plate in the width direction of the lithographic cover plate, which can further improve the structural strength of the lithographic cover plate. Further, the protrusion 211 may be symmetrically arranged in the width direction of the lithographic cover plate 200. This arrangement can allow a center line of the protrusion to coincide with a center line of the lithographic cover plate, which further helps to improve the effect of the protrusion on the structural strength of the lithographic cover plate.

In some embodiments of the present disclosure, as understood with reference to FIG. 6, a ratio of an extending distance of the protrusion 211 in a length direction of the lithographic cover plate 200 to a length of the lithographic cover plate 200 may range from 0.2 to 0.9. For example, the ratio may be 0.2, 0.3, 0.4, 0.5, 0.6, 0.7, 0.8, 0.9, etc. Increasing the extending distance of the protrusion in the length direction of the lithographic cover plate helps to further improve the structural strength of the lithographic cover plate on the one hand and can obtain a longer groove on the other hand. Therefore, space for exhausting the gas evolved by the bare cell, which further facilitates the exhaust of gas evolved in different regions of the bare cell. If the extending distance of the protrusion in the length direction of the lithographic cover plate is too short, the length of the corresponding groove will also be short, with a limited capacity of improving the structural strength of the lithographic cover plate and the exhaust of the bare cell. With the extending distance of the protrusion in the length direction of the lithographic cover plate satisfying the given setting requirements, the structural strength of the lithographic cover plate and the exhaust effect of the bare cell can be further improved, and the risk of poor exhaust of the bare cell can be reduced. Further, a ratio of an extending distance of the protrusion 211 in a length direction of the lithographic cover plate 200 to a length of the lithographic cover plate 200 may range from 0.5 to 0.9. This arrangement can further increase the coverage length of each of the protrusion and the groove on the lithographic cover plate, which further improves the structural strength of the lithographic cover plate and the exhaust effect of the bare cell.

In some embodiments of the present disclosure, as understood with reference to FIG. 7, a ratio of a depth of the recess 221 to a thickness of the lithographic cover plate 200 may range from 0.2 to 1, for example, it may be 0.3, 0.4, 0.5, or 0.5, 0.6, 0.7, 0.8, 0.9, 1, etc.; and/or a ratio of a height of the protrusion 211 to the thickness of the lithographic cover plate 200 may range from 0.2 to 1, for example, it may be 0.3, 0.4, 0.5, 0.6, 0.7, 0.8, 0.9, 1, etc. If the depth of the groove is too small, the gas flow channel formed at the lithographic cover plate will also be small, with no obvious improvement in the exhaust effect. If the height of the protrusion 211 is too small, there will be no obvious improvement in the structural strength of the lithographic cover plate. Increasing the depth of the groove and the height of the protrusion can improve the exhaust effect of the bare cell and the structural strength of the lithographic cover plate. However, if the depth of the groove and the height of the protrusion are too large, it will be difficult to prepare the groove and the protrusion through the punching. By controlling the depth of the gas guide groove and the height of the protrusion to satisfy the given conditions, the corresponding lithographic cover plate structure can be easily obtained through the pouching while the lithographic cover plate has both better exhaust effect and better structural strength.

In some embodiments of the present disclosure, as understood with reference to FIG. 6, a ratio of the extending distance of the protrusion 211 in the width direction of the lithographic cover plate 200 to a width of the lithographic cover plate 200 may range from 0.05 to 0.95. For example, the ratio may be 0.05, 0.1, 0.2, 0.3, 0.4, 0.5, 0.6, 0.7, 0.8, 0.9, etc. The protrusion and groove are arranged correspondingly and may be obtained through the punching. The protrusion and groove have the same change trend in the width direction, the thickness direction, and the length direction of the lithographic cover plate. if the extending distance of the protrusion in the width direction of the lithographic cover plate is increased, the width of the groove and the formed gas flow channel will also enlarge accordingly, which can improve the exhaust effect. However, if the extending distance of the protrusion in the width direction of the lithographic cover plate is too large, on the one hand, it will reduce the effect of enhancing the structural strength of the lithographic cover plate, and on the other hand, it will also affect the limiting effect of the lithographic cover plate on the lower plastic member. By controlling the extending distance of the protrusion in the width direction of the lithographic cover plate to satisfy the given conditions, the lithographic cover plate can achieve better exhaust effect and better structural strength while limiting the lower plastic member. In some embodiments, a ratio of an extending distance of the protrusion 211 in a width direction of the lithographic cover plate to a width of the lithographic cover plate may range from 0.2 to 0.9. Satisfying this condition helps to further balance the exhaust effect and the structural strength of the lower plastic member as well as the limiting effect of the lithographic cover plate on the lower plastic member.

In some embodiments of the present disclosure, as understood with reference to FIG. 6, the extending distance of the protrusion 211 in the width direction of the lithographic cover plate 200 may be flexibly changed based on the arrangement position of the explosion-proof valve mounting hole 212 and the like. As some specific examples, the protrusion 211 may include a first region 211a and a second region 211b. The second region 211b may have an explosion-proof valve mounting hole 212. The first region 211a may have an extending distance smaller than an extending distance of the second region 211b in the width direction of the lithographic cover plate 200. In practice, the larger width of the second region 211b facilitates mounting, welding, and normal opening of the explosion-proof valve, and the relatively small width of the first region 211a helps to improve the structural strength of the lithographic cover plate while balancing the limiting effect of the lithographic cover plate on the lower plastic member. Therefore, satisfying the above conditions helps to further balance the exhaust effect and the structural strength of the lower plastic member as well as the limiting effect of the lithographic cover plate on the lower plastic member.

In some embodiments of the present disclosure, as understood with reference to FIG. 6, a distance between an edge of the second region 211b and an edge of the explosion-proof valve mounting hole 212 is greater than or equal to 1 mm. If the distance between the edge of the second region (that is, an edge of the protrusion) and the edge of the explosion-proof valve mounting hole is too small, it will hinder the mounting and the welding of the explosion-proof valve on the one hand, and it will also affect the gas flow channel below the explosion-proof valve on the other hand. With the distance between the edge of the second region and the edge of the explosion-proof valve mounting hole satisfying the given requirements, the fitting of the explosion-proof valve is facilitated while balancing the exhaust effect.

In some embodiments of the present disclosure, as understood with reference to FIG. 6, the extending distance of the first region 211a in the width direction of the lithographic cover plate 200 may be greater than or equal to 2 mm, such as 3 mm, 5 mm, 8 mm, or 10 mm, which may be selected flexibly based on the actual situation such as the width of the lithographic cover plate. Controlling the extending distance of the first region in the width direction of the lithographic cover plate to satisfy the given conditions can not only effectively improve the structural strength of the lithographic cover plate, but also help the lithographic cover plate to obtain an effective gas flow channel.

In some embodiments of the present disclosure, as understood with reference to FIG. 6, the ratio of the extending distance of the first region 211a in the width direction of the lithographic cover plate 200 to a width of the lithographic cover plate 200 may range from 0.5 to 0.6, for example, it may be 0.5, 0.52, 0.54, 0.56, 0.58, 0.6, etc. Controlling the extending distance of the first region in the width direction of the lithographic cover plate to satisfy the given conditions can not only obtain a larger gas flow channel, facilitating the gas evolved in the bare cell to converge towards the underside of the explosion-proof valve, but also improve the structural strength of the lithographic cover plate.

In some embodiments of the present disclosure, a ratio of an extending distance of the first region 211a in the length direction of the lithographic cover plate to the extending distance of the protrusion 211 in the length direction of the lithographic cover plate ranges from 0.4 to 0.9, for example, it may be 0.4, 0.5, 0.55, 0.6, 0.65, 0.7, 0.75, 0.8, 0.9, etc., which can be selected flexibly based on the actual situation such as the length of the lithographic cover plate 200. Controlling the extending distance of the first region 211a in the length direction of the lithographic cover plate to satisfy the given condition can not only further effectively improve the structural strength of the lithographic cover plate, but also help the lithographic cover plate to obtain a longer gas flow channel, facilitating the convergence of the gas evolved in the bare cell towards the underside of the explosion-proof valve.

In some embodiments of the present disclosure, as understood with reference to FIG. 6, the protrusion 211 may further include a third region 211c. The third region 211c may have a liquid injection hole 213. An extending distance of the third region 211c in the width direction of the lithographic cover plate 200 may be greater than or equal to the extending distance of the first region 211a in the width direction of the lithographic cover plate 200. This arrangement not only helps to balance the exhaust of the lithographic cover plate and the improvement in the structural strength, but also facilitates the arrangement of the liquid injection hole, liquid injection operation, and sealing of the liquid injection hole.

In some embodiments of the present disclosure, as understood with reference to FIG. 8, in addition to the lithographic cover plate 200 and the lower plastic member 100, the cover plate assembly may further include an upper plastic member 300, an explosion-proof valve 400, a mass block 500, a sealing ring 600, and a pole 700, and other conventional structure settings.

A third aspect of the present disclosure provides an energy storage device. According to an embodiment of the present disclosure, the energy storage device includes a housing, a cover plate assembly, and a bare cell. The housing has an opening. The cover plate assembly closes the opening. The cover plate assembly is the cover plate assembly according to the above embodiments of the present disclosure or includes the lower plastic member of the above embodiments of the present disclosure. The bare cell is accommodated in the housing. The features and the effects described for the above lower plastic member and the above cover plate assembly apply mutatis mutandis to the energy storage device, and details thereof are not repeated herein. In general, the energy storage device can not only better satisfy the exhaust requirement of the bare cell under the overheating condition of the bare cell, but also achieve better internal stability of the bare cell.

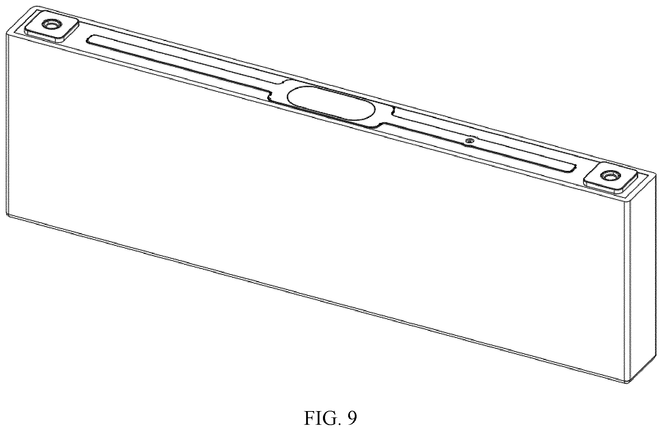

It should be noted that the specific type of the energy storage device is not particularly limited, and those skilled in the art can flexibly choose the type based on actual needs. For example, the energy storage device may be a single bare cell (with reference to FIG. 9 for understanding), or may be a battery module or a battery pack that include the bare cell. For another example, the energy storage device may be a laminated battery or a wound battery, such as a wound prismatic battery. For yet another example, the energy storage device may be a lithium battery or a sodium battery.

A fourth aspect of the present disclosure provides an electrical apparatus. According to an embodiment of the present disclosure, the electrical apparatus includes the above-mentioned energy storage device. The features and the effects described for the above energy storage device apply mutatis mutandis to the electrical apparatus, and details thereof are not repeated herein. It should be noted that there is no particular restriction on the specific type of electrical apparatus in the present disclosure, and those skilled in the art can flexibly choose the type based on actual situations. For example, the electrical apparatus may include but is not limited to a vehicle, an aircraft, a household appliance, and the like. The vehicle may include but is not limited to an electric bicycle, an electric tricycle, an electric car, and the like.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of present disclosure have been shown and described above, it should be understood that above embodiments are just examples, and cannot be construed to limit the present disclosure, for those skilled in the art, changes, alternatives, and modifications can be made to the embodiments without departing from the scope of the present disclosure.

## Claims

1. A lower plastic member (100), having:
a first surface (110) having at least one first groove (111); and
a second surface (120) arranged opposite to the first surface (110) in a thickness direction of the lower plastic member (100), the second surface (120) having at least one second groove (121), each of the at least one second groove (121) being in communication with a corresponding first groove (111) of the at least one first groove (111) in a length direction of the lower plastic member (100), and a bottom of each of the at least one first groove (111) extending to the second surface (120).

2. The lower plastic member (100) according to claim 1, wherein the at least one first groove (111) and the at least one second groove (121) are successively and alternately arranged in the length direction of the lower plastic member (100), and a total number of the at least one first groove (111) and the at least one second groove (121) that being successively and alternately arranged is greater than or equal to 3.

3. The lower plastic member (100) according to claim 2, wherein:
the first surface (110) has the at least one first groove (111) arranged at intervals in the length direction of the lower plastic member (100); and/or
the second surface (120) has the at least one second groove (121) arranged at intervals in the length direction of the lower plastic member (100).

4. The lower plastic member (100) according to any one of claims 1 to 3, satisfying at least one of the following conditions:
an extending distance of the at least one first groove (111) in the length direction of the lower plastic member (100) is smaller than or equal to an extending distance of the at least one second groove (121) in the length direction of the lower plastic member (100);
each of the at least one first groove (111) is provided with a reinforcement rib (140), and each of the at least one second groove (121) is provided with a reinforcement rib (140), the reinforcement ribs (140) being arranged in the length direction of the lower plastic member (100);
a ratio of a sum of the extending distance of the at least one first groove (111) in the length direction of the lower plastic member (100) and the extending distance of the at least one second groove (121) in the length direction of the lower plastic member (100) to a length of the lower plastic member (100) is greater than or equal to 0.5;
a side wall of each of the at least one first groove (111) has a thickness ranging from 0.5 mm to 1.5 mm, and a side wall of each of the at least one second groove (121) has a thickness ranging from 0.5 mm to 1.5 mm; or
a bottom of the at least one second groove (121) extends to the first surface (110).

5. The lower plastic member (100) according to claim 4, satisfying at least one of the following conditions:
a ratio of the extending distance of the at least one first groove (111) in the length direction of the lower plastic member (100) to the extending distance of the at least one second groove (121) in the length direction of the lower plastic member (100) ranges from 0.2 to 1;
the ratio of the sum of the extending distance of the at least one first groove (111) in the length direction of the lower plastic member (100) and the extending distance of the at least one second groove (121) in the length direction of the lower plastic member (100) to the length of the lower plastic member (100) ranges from 0.5 to 0.8;
an extending distance of the reinforcement rib (140) in a width direction of the lower plastic member (100) ranges from 0.5 mm to 1.5 mm; or
the at least one first groove (111) has a first exhaust through-hole (112), the first exhaust through-hole (112) penetrating the bottom of each of the at least one first groove (111).

6. The lower plastic member (100) according to any of the claims 1 to 5, wherein the lower plastic member (100) is provided with an explosion-proof valve exhaust region (130), the explosion-proof valve exhaust region (130) having a second exhaust through-hole (131) penetrating the lower plastic member (100) in the thickness direction of the lower plastic member (100), and the explosion-proof valve exhaust region (130) being in communication with the at least one first groove (111) and/or the at least one second groove (121) in the length direction of the lower plastic member (100).

7. The lower plastic member (100) according to claim 6, wherein the at least one first groove (111) and the at least one second groove (121)are successively and alternately arranged at each of two sides of the explosion-proof valve exhaust region (130) in the length direction of the lower plastic member (100).

8. The lower plastic member (100) according to any of the claims 1 to 7, comprising:
a first sub-lower plastic member (100a); and
a second sub-lower plastic member (100b), the first sub-lower plastic member (100a) and the second sub-lower plastic member (100b) being spliced with each other in the length direction of the lower plastic member (100).

9. The lower plastic member (100) according to claim 8, wherein:
the first sub-lower plastic member (100a) is in a lap-joint or a snap-fitting with the second sub-lower plastic member (100b); and/or
each of the first sub-lower plastic member (100a) and the second sub-lower plastic member (100b) has at least one first groove (111) and at least one second groove (121), the at least one first groove (111) and the at least one second groove (121) of the first sub-lower plastic member (100a) being successively and alternately arranged in the length direction of the lower plastic member (100), and the at least one first groove (111) and the at least one second groove (121) of the second sub-lower plastic member (100b) being successively and alternately arranged in the length direction of the lower plastic member (100).

10. A cover plate assembly, comprising: the lower plastic member (100) according to any one of claims 1 to 9.

11. The cover plate assembly according to claim 10, further comprising a lithographic cover plate (200), the lithographic cover plate (200) having a third surface (210) and a fourth surface (220) that are arranged opposite to each other in a thickness direction of the lithographic cover plate (200), wherein:
the third surface (210) is provided with a protrusion (211) arranged continuously in a length direction of the lithographic cover plate (200), the protrusion (211) having an explosion-proof valve mounting hole (212); and
the fourth surface (220) abuts with a first surface (110) of the lower plastic member (100) and has a recess (221) arranged corresponding to the protrusion (211),
preferably, the protrusion (211) is arranged at a middle part of the lithographic cover plate (200) in a width direction of the lithographic cover plate (200); and/or
the protrusion (211) is symmetrically arranged in the width direction of the lithographic cover plate (200).

12. The cover plate assembly according to claim 11, satisfying at least one of the following conditions:
a ratio of an extending distance of the protrusion (211) in a length direction of the lithographic cover plate (200) to a length of the lithographic cover plate (200) ranges from 0.2 to 0.9;
a ratio of the extending distance of the protrusion (211) in the width direction of the lithographic cover plate (200) to a width of the lithographic cover plate (200) ranges from 0.05 to 0.95;
a ratio of a depth of the recess (221) to a thickness of the lithographic cover plate (200) ranges from 0.2 to 1; or
a ratio of a height of the protrusion (211) to the thickness of the lithographic cover plate (200) ranges from 0.2 to 1.

13. The cover plate assembly according to claim 11 or 12, wherein the protrusion (211) comprises a first region (211a) and a second region (211b), the explosion-proof valve mounting hole (212) being provided on the second region (211b), and wherein:
an extending distance of the first region (211a) in a width direction of the lithographic cover plate (200) is smaller than an extending distance of the second region (211b) in a width direction of the lithographic cover plate (200); and/or
a ratio of an extending distance of the protrusion (211) in a length direction of the lithographic cover plate (200) to a length of the lithographic cover plate (200) ranges from 0.5 to 0.9,
preferably, the cover plate assembly satisfies at least one of the following conditions:
a distance between an edge of the second region (211b) and an edge of the explosion-proof valve mounting hole (212) is greater than or equal to 1 mm;
a ratio of the extending distance of the first region (211a) in the width direction of the lithographic cover plate (200) to a width of the lithographic cover plate (200) ranges from 0.5 to 0.6;
the extending distance of the first region (211a) in the width direction of the lithographic cover plate (200) is greater than or equal to 2mm;
a ratio of an extending distance of the first region (211a) in the length direction of the lithographic cover plate (200) to the extending distance of the protrusion (211) in the length direction of the lithographic cover plate (200) ranges from 0.4 to 0.9; or
the protrusion (211) further comprises a third region (211c) having a liquid injection hole (213), an extending distance of the third region (211c) in the width direction of the lithographic cover plate (200) being greater than or equal to the extending distance of the first region (211a) in the width direction of the lithographic cover plate (200).

14. An energy storage device, comprising:
a housing having an opening;
a cover plate assembly configured to close the opening, the cover plate assembly being the cover plate assembly according to any one of claims 10 to 13 or comprising the lower plastic member (100) according to any one of claims 1 to 9; and
a bare cell accommodated in the housing.

15. An electrical apparatus, comprising the energy storage device according to claim 14.
